# EUROPEAN PATENT APPLICATION

(11) **EP 4 685 512 A1**
(43) Date of publication of application: **28.01.2026**
(21) Application number: 25178784.2
(22) Date of filing: 26.05.2025
(51) Int. Cl.: G01S 7/02, G01S 7/03, G01S 13/931, H01Q 1/32

(54) **RADAR ANTENNA DEVICE AND VEHICLE**

(30) Priority: 26.07.2024 TW 113127807
(71) Applicant: Arcadyan Technology Corporation, Hsinchu City 30071 (TW)
(72) Inventor: CHAN, Yi-Chen, 325 Taoyuan City (TW); KUO, Shin-Lung, 820 Kaohsiung City (TW)
(74) Representative: Krauns, Christian

(57) **Abstract**

A radar antenna device for being installed on a lateral surface of a vehicle is provided by the present disclosure. The radar antenna device comprises: a base; a first antenna PCB disposed on the base, and including a first radar transmitting unit; and a second antenna PCB disposed on the base, and including a second radar transmitting unit. The first and second radar transmitting units respectively transmit radar signals including a strong signal region and a weak signal region and a signal border therebetween. The average gain of signal strength of the strong signal regions is greater than 0db, and the average gain of signal strength of the weak signal regions is less than 0db. An intersection is formed by the signal border of the radar signals, and the shortest distance between the intersection and the second surface is between 30mm to 80mm.

## Description

### BACKGROUND OF THE INVENTION

### Field of the Invention

The present disclosure is related to techniques of a radar antenna device including radar transmitting units, and particularly, to the radar antenna device installed on a vehicle.

### Description of the Related Art

Conventional radar antenna radiation field pattern is designed to be directional, which radiates vertical to and along the normal line of the circuit board (or PCB) which the radar antenna is mounted on, and thus, there is better signal strength within a specific angle range, which may be referred as strong signal region, and, outside the strong signal region, there is region with weaker signal strength, which may be referred as detection blind region. In order to increase the range of strong signal region, a radar antenna composed of multiple circuit boards has been developed. However, there is still detection blind region that affects the detection capability of the radar antenna. Therefore, it is necessary to develop techniques for decreasing the detection blind region of radar antennas.

### SUMMARY OF THE INVENTION

The present disclosure is related to techniques of radar antenna devices including radar transmitting units, and particularly, to radar antenna devices installed on vehicles.

According to a first aspect of the present disclosure, a radar antenna device, for being installed on a lateral surface of a vehicle moving along a first direction, includes a base including a first surface and a second surface opposite to the first surface. The radar antenna device also includes a first antenna printed circuit board (hereafter referred to as PCB), which is disposed on the first surface and includes a first radar transmitting unit. The radar antenna device also includes a second antenna PCB, which is disposed on the first surface and includes a second radar transmitting unit. The first radar transmitting unit and the second radar transmitting unit respectively transmit a first radar signal and a second radar signal, and the first radar signal and the second radar signal both include a strong signal region and a weak signal region, with a signal border located between the strong signal region and the weak signal region. An average gain of signal strength of each of the strong signal regions is greater than 0db, and an average gain of signal strength of each of the weak signal regions is less than 0db. An intersection is formed by the signal border of the first radar signal and the signal borer of the second radar signal, and a shortest distance between the intersection and the second surface is between 30mm and 80mm.

According to a second aspect of the present disclosure, a vehicle, moving along a first direction, includes a lateral surface parallel to the first direction. The vehicle also includes a radar antenna device as disclosed in the first aspect of the present disclosure, installed on the lateral surface.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 is a diagram illustrating an example antenna PCB according to one or more embodiments of the present disclosure.
FIG. 2 is a diagram illustrating signal zones of the example antenna PCB including the radar transmitting unit, according to one or more embodiments of the present disclosure.
FIG. 3A is a diagram illustrating a top view, along Z-axis, of an example radar antenna device, according to one or more embodiments of the present disclosure.
FIG. 3B is a diagram illustrating the example radar antenna device, according to one or more embodiments of the present disclosure.
FIGs. 4A and 4B are diagrams respectively illustrating a perspective view, along X-axis, and a radar antenna PCB of a radar antenna device, according to one or more embodiments of the present disclosure.
FIGs.5A and 5B are diagrams respectively illustrating a perspective view, along X-axis, and a radar antenna PCB of a radar antenna device, according to one or more embodiments of the present disclosure.
FIGs.6A and 6B are diagrams respectively illustrating a perspective view, along X-axis, and a radar antenna PCB of a radar antenna device, according to one or more embodiments of the present disclosure.
FIG. 6C is a diagram illustrating an appearance view, along X-axis, of a radar antenna device, according to one or more embodiments of the present disclosure.
FIG. 6D is a diagram illustrating a bottom view, along z-axis, of the radar antenna device, according to one or more embodiments of the present disclosure.
FIG. 6E is a diagram illustrating a stereo view of the radar antenna device, according to one or more embodiments of the present disclosure.

Like reference numbers and designations in the various drawings indicate like elements. It is also to be understood that the various exemplary implementations shown in the figures are merely illustrative representations and are not necessarily drawn to scale.

### DETAILED DESCRIPTION OF THE INVENTION

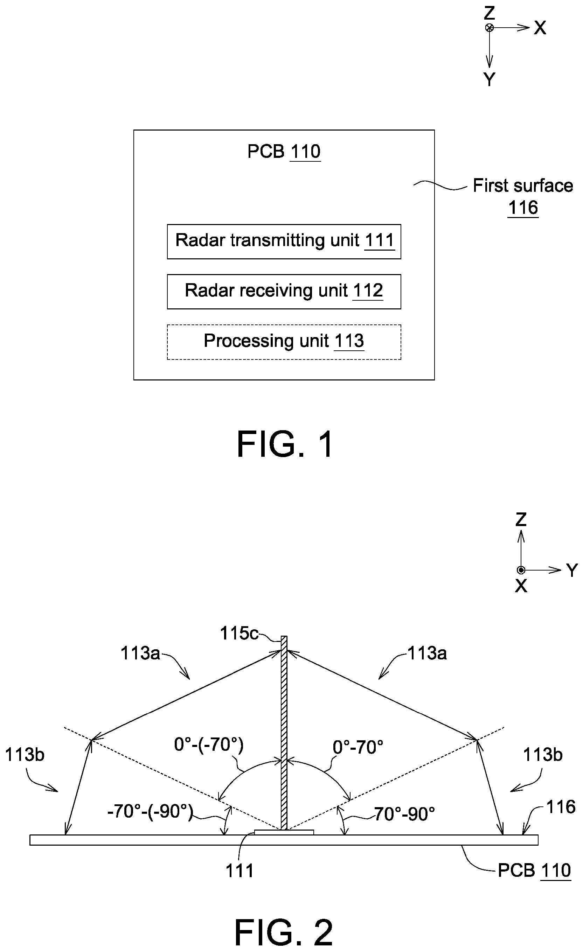

FIG. 1 is a diagram illustrating an antenna PCB 110 according to one embodiment of the present disclosure. As shown in FIG. 1, the antenna PCB 110 includes a radar transmitting unit 111 and a radar receiving unit 112, wherein the radar transmitting unit 111 and the radar receiving unit 112 are disposed on a first surface 116 of the antenna PCB 110. The radar transmitting unit 111 of the antenna PCB 110 can transmit a radar signal, and the radar receiving unit 112 receives the radar signal reflected by an object for detecting the object. In the embodiment as shown in FIG. 1, the radar transmitting unit 111 and the radar receiving unit 112, disposed the antenna PCB 110, are each single unit, but the present disclosure is not limited thereto. In other embodiments, multiple radar transmitting units and multiple radar receiving units may be disposed on the antenna PCB. For example, two radar transmitting units and four radar receiving units may be disposed on the antenna PCB, or the design may be adjusted according to other requirements. The antenna PCB also includes a processing unit 113, which may be disposed on the first surface 116 or another side of the antenna PCB 110 according to actual needs. The processing unit 113 may be electrically connected to the radar transmitting unit 111 and the radar receiving unit 112 for processing transmitted and received radar signals. According to radar antenna radiation field pattern, in different directions within the hemispherical region on the first surface 116 of the antenna PCB 110, the radar transmitting strength varies. And, it is explained in detail with reference to FIG. 2 as follows.

FIG. 2 is a diagram illustrating signal zones of the antenna PCB 110 including the radar transmitting unit 111, according to one embodiment of the present disclosure. In this embodiment, the radar antenna radiation field pattern of the radar transmitting unit 111 is designed with directional, and, in other words, the radar transmitting strength (gain) is stronger in certain angles. In the embodiment, the signal transmitting strength of the radar transmitting unit 111 radiates from the center of the radar transmitting unit 111 toward to the normal line 115c perpendicular to the first surface 116 of the antenna PCB 110. The normal line 115c passes through the center of the radar transmitting unit 111, and the gain, in the direction along the normal line 115c, of the signal transmitting strength of the radar transmitting unit 111 is the strongest. Additionally, in the example of FIG. 2, the x-direction and y-direction are interchangeable. It can be understood from following Table I that the region within an angle ranging from -70° to 0° and from 0° to 70° with respect to the normal line 115c of the first surface 116 of the antenna PCB 110, which corresponds to a total field of view (FoV) of 140°, is defined as a first signal region 113a where the signal transmitting strength is better (with an average gain from 4.62 to 10.79dB). , And, a region within an angle ranging from 70° to 90° and -70° to -90° with respect to the normal line 115c of the first surface 116 of the antenna PCB 110 is defined as a second signal region 113b where the signal (less signal gain) transmitting strength is weaker (with an average gain from -4.75 to -6.31dB).

**Table I: relations between antenna transmitting intensity and angle**

| | | | | | | |
|---|---|---|---|---|---|---|
| Angle range | -70° to (-90°) | -50° to (-70°) | 0° to (-50°) | 0° to 50° | 50° to 70° | 70° to 90° |
| Average gain (dB) | -6.31 | 5.33 | 10.79 | 10.22 | 4.62 | -4.75 |

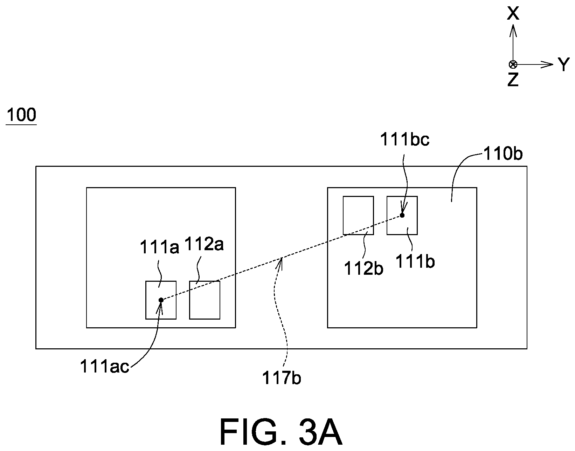

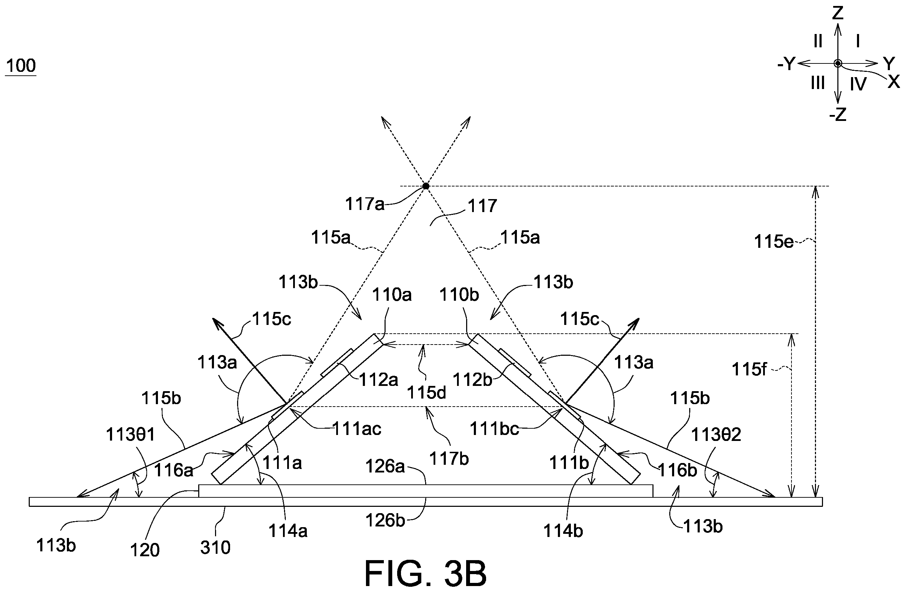

According to the first signal region 113a and the second signal region 113b defined above, as the structure of the radar antenna device 100 in FIGs. 3A and 3B, the radar antenna device 100 includes a base 120 and two antenna PCB (the antenna PCB 110a and the antenna PCB 110b). The structure of each of the antenna PCB 110a and the antenna PCB 110b is identical to that of foresaid antenna PCB 110, and respectively includes the radar transmitting unit 111a and the radar transmitting unit 111b respectively dispose on the first surface 116a and the first surface 116b, wherein the antenna PCB 110a, the antenna PCB 110b and the base 120 are arranged approximately in a triangle. The first surface 116a and the first surface 116b both face away from the base 120. Since the base 120 has an included angle with the two antenna PCBs (the antenna PCB 110a and the antenna PCB 110b), there are some regions that cannot be located within a range of less than 70° of the angle from each normal line of the two PCBs, but located in the second signal region 113b with weaker transmitting signal strength. Therefore, the detection blind region of the radar is formed. And, it is explained in detail, with reference to FIGs. 3A and 3B as follows.

FIG. 3A is a diagram illustrating a top view, along Z-axis, of the radar antenna device 100, according to one embodiment of the present disclosure. The antenna PCB 110a includes the radar transmitting unit 111a and the radar receiving unit 112a which are with offset from the radar transmitting unit 111b and the radar receiving unit 112b of the antenna PCB 110b in the Y-axis direction. In this embodiment, the connecting line 117b of the center 111ac of the radar transmitting unit 111a and the center 111bc of the radar transmitting unit 111b and the second center point is not parallel to the direction (Y-axis) which a vehicle moving forward or backward along.

FIG. 3B is a diagram illustrating the radar antenna device 100, according to one embodiment of the present disclosure. The radar antenna device 100 includes the antenna PCB 110a and the antenna PCB 110b. The radar transmitting unit 111a is disposed on the first surface 116a of the antenna PCB 110a, and the radar transmitting unit 111b is disposed on the first surface 116b of the antenna PCB 110b. The radar antenna device 100 also includes the base 120 including the first base surface 126a and second base surface 126b opposite to the first base surface 126a. The antenna PCB 110a and the antenna PCB 110b directly or indirectly mounted on the first base surface 126a by a mounting unit (not shown). When the radar antenna device 110 is installed on the vehicle lateral surface 310, the second base surface 126b is parallel to and/or directly contacting the vehicle lateral surface 310. In other embodiments, the radar antenna device 100 may be installed on flat surfaces of other mobile vehicles. As shown in FIG. 3B, along Z-axis, on the antenna PCB 110a and the antenna PCB 110b, the radar transmitting unit 111a and the radar transmitting unit 111b are both closer to the base 120 than the radar receiving unit 112a and the radar receiving unit 112b. As shown in FIG. 3B, in this embodiment, the Y-axis is the direction which the vehicle moving forward or backward along, the Y-axis is parallel to the vehicle lateral surface 310, the direction of Z-axis is extending outside the vehicle lateral surface 310, and the direction of -Z-axis is extending inside the vehicle lateral surface 310. Both of the normal line 115c on the first surface 116a of the antenna PCB 110, and the normal line 115c on the first surface 116b of the antenna PCB 110b are extending toward outside the vehicle lateral surface 310. For further explanation, when the vehicle lateral 310 is parallel to Y-axis, the normal line 115c on the first surface 116a of the antenna PCB 110a radiates in the direction of the second quadrant composed of the -Y axis and the Z axis, and the normal line 115c on the first surface 116b of the antenna PCB 110b radiates in the direction of the first quadrant composed of the Y axis and the Z axis, wherein the first surface 116a of the antenna PCB 110a and the first surface 116b of the antenna PCB 110b face away from the base 120 respectively. In some implementations, the radar antenna device 100 is particularly installed on a large vehicle, such as a large truck or van with a towed vehicle, wherein the large vehicle includes a powered body and a non-powered towed vehicle, and the radar antenna device 100 is installed on the powered body. As discussed above, the first signal regions 113a of the radar transmitting unit 111a and the radar transmitting unit 111b are respectively located within the range of the angle between 0° to 70° and -70° to 0° with the normal lines 115c of the first surface 116a and the first surface 116b (FoV of 140 degrees in total). In FIG. 3A, the triangle region, which is formed by the intersection (vertex 117a) of the upper borders 115a of the two first signal regions 113a, and the first connecting line 117b of the center 111ac of the radar transmitting unit 111a and the center 111bc of the radar transmitting unit 111b, is the detection blind region 117. The detection blind region 117 is not located in the first signal region 113a and completely overlaps the second signal region 113b with weaker signal strength. The detection blind region 117 even includes a region with no signal. In one embodiment, the first surfaces 116a and 116b of the two antenna PCBs 110a and 110b respectively form a first angle 114a and a second angle 114b with the first surface 126a of the base 120, and the antenna PCB 110a and the antenna PCB 110b are separated by the first distance 115d. The first distance 115d is the shortest distance between the antenna PCB 110a and the antenna PCB 110b, and the first angle 114a, the second angle 114b and the first distance 115d would affect the size of the detection blind zone 117. In this embodiment, a second distance 115e is between the vertex 117a of the detection blind zone 117 and the second base surface 126b of the base 120. When the first angle 114a, the second angle 114b and/or the first distance 115d are/is reduced, the first connection line 117b and the second distance 115e of the detection blind region 117 would be shortened, and namely, the detection blind region 117 will be reduced. Conversely, when the first angle 114a, the second angle 114b and/or the first distance 115d are/is increased, the first connection line 117b and the second distance 115e of the detection blind region 117 would be increased, and namely, the detection blind region 117 will be increased. Additionally, when the first angle 114a and the second angle 114b are decreased, the second signal region 113b between the antenna PCB 110a, the antenna PCB 110b and the vehicle lateral surface 310 will be increased. When the first angle 114a and the second angle 114b are increased, the second signal region 113b between the antenna PCB 110a, the antenna PCB 110b and the vehicle lateral surface 310 will be decreased.

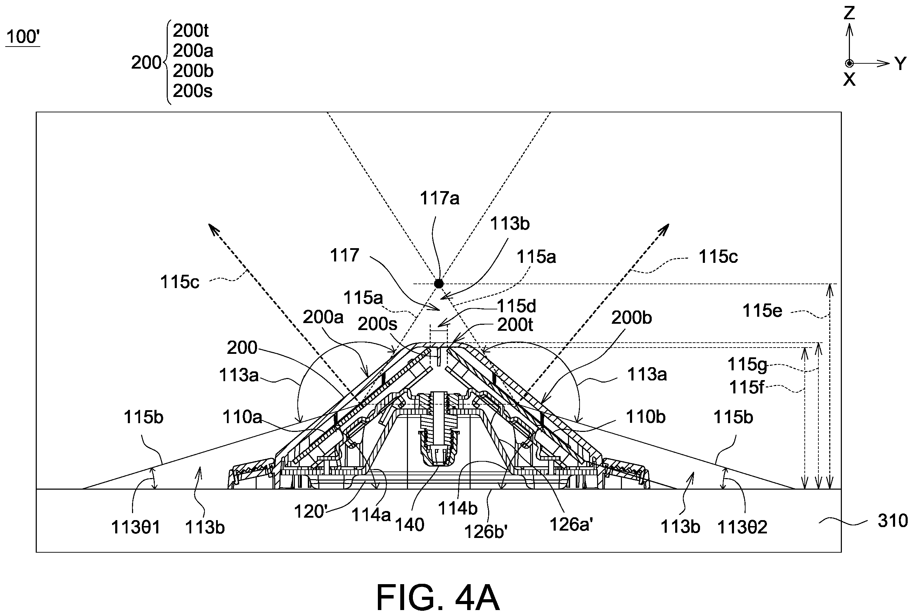

As shown in FIG. 3B, the vertical distance 115f between the highest points of the antenna PCB 110a and the antenna PCB 110b and the second base surface 126b of the base 120 would affect the installation height of the radar antenna device 100, which is also the distance at which the radar antenna device 100 protrudes from the vehicle body (such as the vehicle lateral surface 310). The techniques provided by the present disclosure for decreasing the detection blind region 117 of the radar antenna device is explained in detail with reference to FIGs. 4A to 6A as follows.

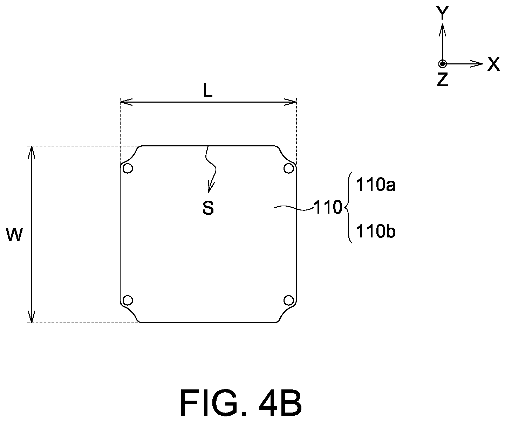

FIGs. 4A and 4B are diagrams respectively illustrating a perspective view of a radar antenna device 100' along X-axis, and a radar antenna PCB 110, according to one or more embodiments of the present disclosure. As shown in FIG. 4A, the radar antenna device 100' is installed on the vehicle lateral surface 310, and includes the antenna PCB 110a, the antenna PCB 110b and the base 120'. In this embodiment, the first base surface 126a' of the base 120' is a protruded surface, the antenna PCB 110a and the antenna PCB 110b is indirectly mounted on the first base surface 126a' of the base 120' by brackets (without reference number). The second base surface 126b' of the base 120' is a flat surface which faces and is parallel to the vehicle lateral surface 310. The difference between the radar antenna device 100' of FIG. 4A and the radar antenna device 100 of FIG. 3B is that the radar antenna device 100' further includes the case 200 covering the antenna PCB 110a, the antenna PCB 110b and the base 120'. The case 200 is used to protect and isolate the antenna PCB 110a and the antenna PCB 110b from water vapor erosion. In one embodiment, according to the radar antenna device 100' shown in FIG. 4A, the case 200 includes two case surfaces (the case surface 200a and the case surface 200b), the top surface 200t disposed between the case surface 200a and the case surface 200b, and the partitioning part 200s coupled to the top surface 200t and extending toward to the base 120'. In one embodiment, the partitioning part 200s may be extended between the antenna PCB 110a and the antenna PCB 110b, and the case surface 200a and the case surface 200b are respectively covering and parallel to the antenna PCB 110a and the antenna PCB 110b, wherein the top surface 200t is a plane and located above the first distance 115d, and the shortest vertical distance 115g between the top surface 200t and the vehicle lateral surface 310 is greater than the vertical distance 115f. In one embodiment, the length difference between the vertical distance 115g and the vertical distance 115f is between 0.1mm and 20mm. As shown in FIG. 4B, in one embodiment, the antenna PCB 110 (may be simultaneously referred to the antenna PCB 110a and the antenna PCB 110b) is approximately a square shape, wherein lengths of four sides of the antenna PCB 110 are identical and the length L and the width W are both between 50mm and 70mm, such as 59mm. The first angle 114a between the first surface 116a of the antenna PCB 110a and the second base surface 126b' of the base 120', and the second angle 114b between the first surface 116b of the antenna PCB 110b and the second base surface 126b' of the base 120' are between 25 degrees and 50 degrees, such as 40 degrees. Angles 113θ1 and 113θ2 between lower borders 115b of two first signal regions 113a and the vehicle lateral surface 310 are between 15 degrees and 25 degrees, such as 20 degrees. The shortest first distance 115d between the antenna PCB 110a and the antenna PCB 110b is between 0mm and 10mm, such as 5.3mm, such that the second distance 115e between the vertex 117a of the detection blind region 117 and the second base surface 126b' of the base 120' is between 50mm and 100mm, such as 73.7mm. The maximum vertical distance 115f between the antenna PCB 110a and/or the antenna PCB 110b, and the second base surface 126b' of the base 120' is between 30mm and 50mm, such as 47.4mm, such that the shortest vertical distance 115g between the top surface 200t of the case 200 and the vehicle lateral surface 310 is between 30.1mm and 50, such as between 47.5mm and 50 mm (relevant with installation height of the radar antenna device 100'). In other words, by such design, the second distance 115e may be shorten to range between 50mm and 80mm, such as 73.6 mm (decreasing the detection blind region). In one embodiment, the radar antenna device 100' also includes a waterproof outlet feature 140 configured to electrically connect to external device (such as control unit or processing unit) for signal transmission, such as the detection signal of the radar antenna device 100'.

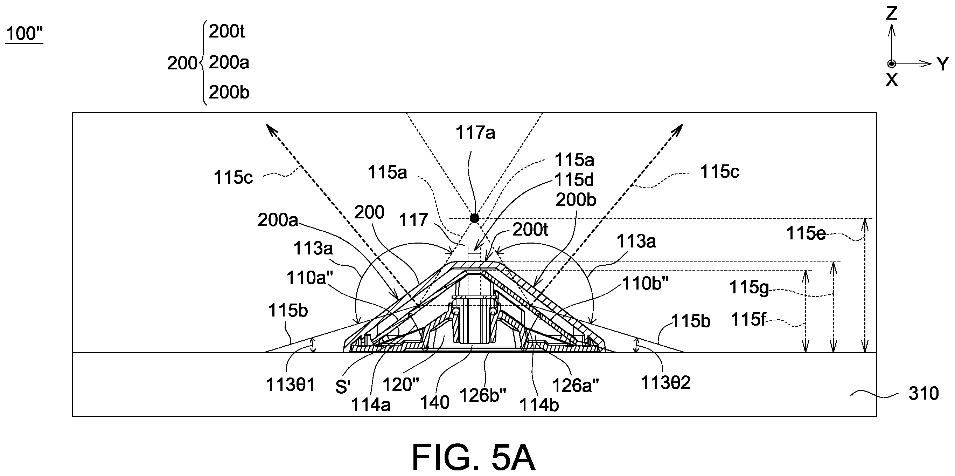

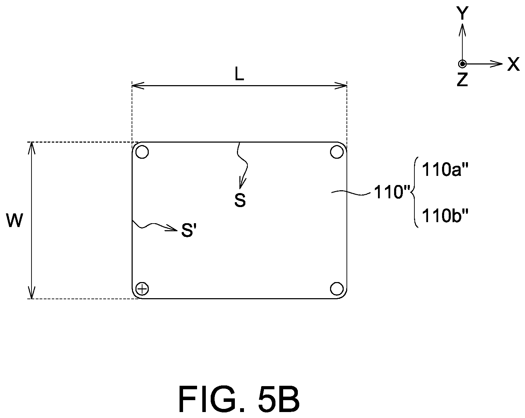

FIGs.5A and 5B are diagrams respectively illustrating a perspective view of the radar antenna device 100" along X-axis, and the radar antenna PCB 110", according to one embodiment of the present disclosure. The difference between the radar antenna device 100" and the radar antenna device 100' is that the dimension of the antenna PCB 110", which can be simultaneously represent both the antenna PCB 110a" and the antenna PCB 110b" as shown in FIG. 5B, is different from the dimension of the antenna PCB 110 of the radar antenna device 100'. The antenna PCB 110" is approximately a rectangular shape and includes side length S and short sides S' shorter than the side length S of the radar antenna PCB 110. In one embodiment, the length L of the side length S of the radar antenna PCB 110" is between 44mm and 64mm, such as 54mm, and the width W of the short side S' of the radar antenna PCB 110" is between 30mm and 50mm, such as 39.2mm. In one embodiment, side lengths S of the antenna PCB 110a" and the antenna PCB 110b" are parallel to the second base surface 126b" of the base 120", the first angle 114a and the second angle 114b are respectively formed between the short sides S' and the second base surface 126b" of the base 120" are between 22 degrees and 47 degrees, such as 37 degrees, so the second distance 115e between the vertex 117a of the detection blind region 117 and the second base surface 126b" of the base 120" is reduced to a range between 30mm to 50mm, such as 44.8mm. The maximum vertical distance 115f between the second base surface 126b" of the base 120" and the top point of antenna PCB 110a" and the antenna PCB 110b" is reduced to less than 30mm, such as 27.6mm, so the shortest vertical distance 115g between the top surface 200t of the case 200 and the vehicle lateral surface 310 may be shortened to a range between 27.7mm to 47.6 (relevant with installation height of the radar antenna device 100"). In one embodiment, the radar antenna device 100" also includes a waterproof outlet feature 140 configured to electrically connect to external device (such as control unit or processing unit) for signal transmission, such as the detection signal of the radar antenna device 100".

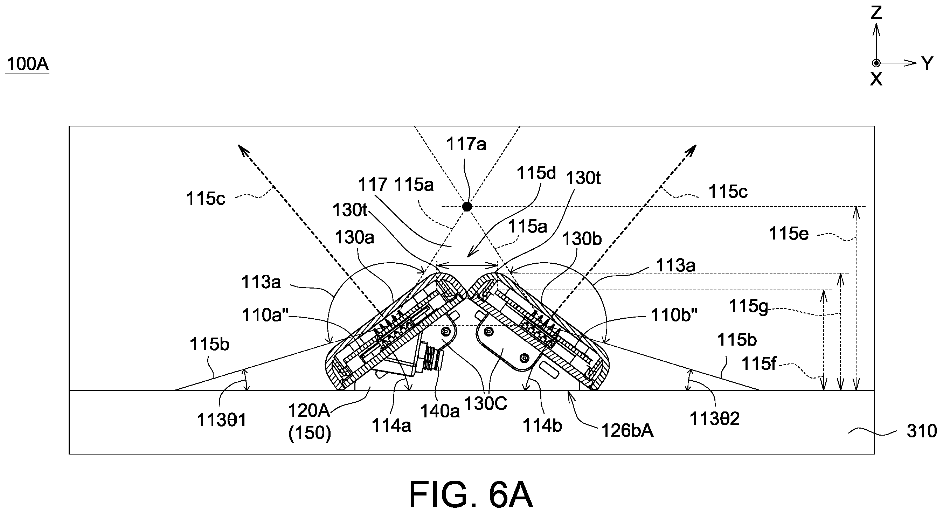

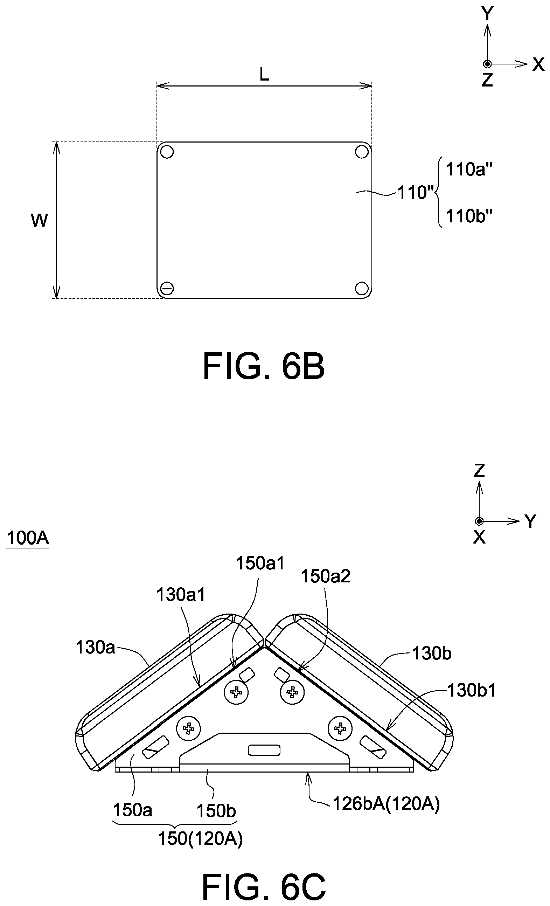

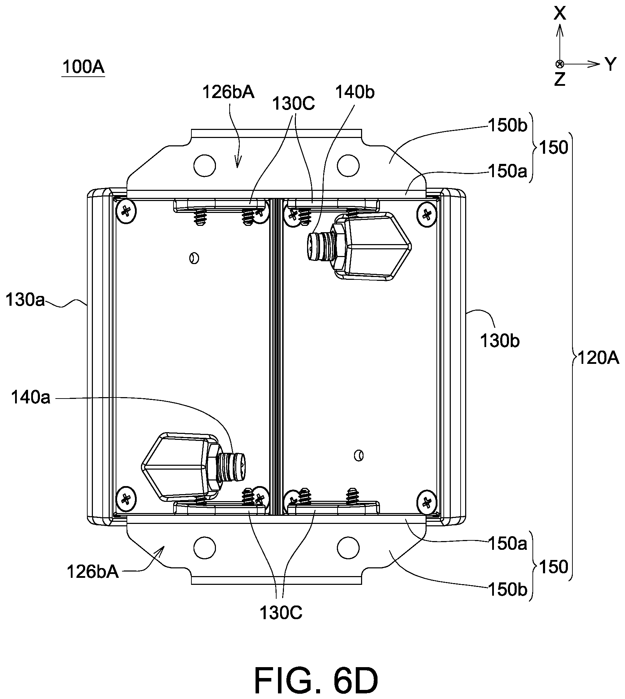

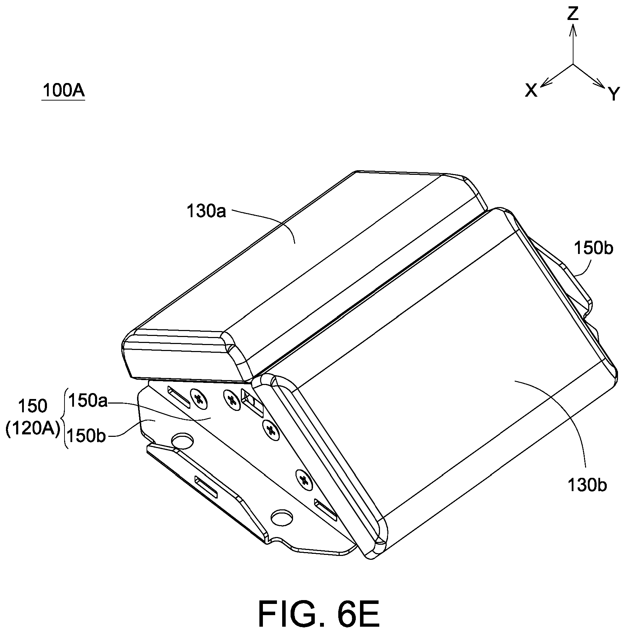

FIGs. 6A to 6E are diagrams illustrating the radar antenna device 100A, according to one or more embodiments of the present disclosure, wherein FIGs.6A and 6B respectively show a perspective view along X-axis, and the radar antenna PCB 110" of the radar antenna device 100A, FIG. 6C shows the appearance view, along X-axis, of the radar antenna device 100A, FIG. 6D shows the bottom view, along z-axis, of the radar antenna device 100A, and FIG. 6E shows the stereo view of the radar antenna device 100A.

As shown in FIGS. 6A, 6B and 6C, the difference between the radar antenna device 100A and the radar antenna device 100" is that the antenna PCB 110a" and the antenna PCB 110b" are respectively covered by a first case 130a and a second case 130b, and the first case 130a and the second case 130b respectively include multiple connecting parts 130c coupled to the base 120A (as shown in FIG. 6C) installed on the vehicle lateral surface 310. As shown in FIG. 6D, the base 120A include two sets of brackets 150 respectively disposed on two sides of the first case 130a and the second case 130b. Each set of brackets 150 includes the upper mounting bracket 150a and the lower mounting bracket 150b, wherein the upper mounting bracket 150a is detachably coupled to the connecting part 130c, and the lower mounting bracket 150b is detachably coupled to the vehicle lateral surface 310. As shown in FIG. 6E, the upper mounting bracket 150a and the lower mounting bracket 150b form "L" shape.

As shown in FIG. 6A, the antenna PCB 110a" and the antenna PCB 110b" are respectively separated by the first case 130a and the second case 130b, and the shortest first distance 115d between the antenna PCB 110a" and the antenna PCB 110b" is between 10mm and 30mm, such as 18.4mm, such that the second distance 115e between the vertex 117a of the detection blind region 117 and the second base surface 126bA of the base 120A is between 50mm and 70mm, such as 61.7mm. The vertical distance 115f between the second base surface 126bA of the base 120A and the top point of the antenna PCB 110a" and the antenna PCB 110b" is between 30mm and 40mm, such as 33.8mm, such that the maximum vertical distance 115g between vertexes 130t of the first case 130a, the second base 130b and the second base surface 126bA of the base 120A is between 30.1mm and 50mm, such as between 40mm and 50 mm (relevant with installation height of the radar antenna device 100A). In other words, by such design, the second distance 115e may be reduced to 67.1mm (decreasing the detection blind region), and the vertical distance 115g may be reduced to 40mm (decreasing the installation height). In this embodiment, the radar antenna device 100A also includes the connector 140a and the connector 140b (as shown in FIG. 6D), respectively coupled to the antenna PCB 110a" and the antenna PCB 110" and configured to electrically connect to external device (such as control unit or processing unit) for transmitting signal, such as the detection signal of the radar antenna device 100A'.

As shown in FIG. 6C, the upper mounting bracket 150a includes two inclined surfaces 150a1 and 150a2 respectively parallel to the bottom surface 130a1 of the first case 130a and the bottom surface 130b1 of the second case 130b. In one embodiment, angles respectively between the inclined surfaces 150a1, 150a2, and the second base surface 126bA of the base 120A may be used for determining the first angle 114a and the second angle 114b between 30 degrees to 50 degrees, such as 37 degrees, wherein the first angle 114a and the second angle 114b are formed between the antenna PCB 110a" and the antenna PCB 110b", and the second base surface 126bA of the base 120A. In another embodiment, since the vehicle surface, which the radar antenna device 100A required to be mounted on, may not be flat or completely perpendicular to the ground, the upper mounting bracket 150a and the lower mounting bracket 150b may be connected by connecting parts (not shown), such as screw, for adjusting angles, to make the second base surface 126bA of the base 120A may be as vertical as possible to the ground and parallel to the moving direction of the vehicle (such as in front or back of the vehicle) when the radar antenna device 100A is installed on the surface of the vehicle.

According to the embodiments and examples above, it can be known that, when the radar detection range coverage (FoV) of the radar transmitting unit on the antenna PCB is 140 degrees, the techniques provided by the present disclosure can utilize two angles between the FoV lower border of the antenna PCB and the base, as well as the distance between one end of the two antenna PCBs for adjusting and reducing the detection blind zone, and reducing the distance between the vertex of the detection blind zone and the vehicle body surface, to increase reliabilities of the radar antenna device for detecting objects close to the vehicle body, and to increase driving safety, especially when applied to large vehicles.

While this document may describe many specifics, these should not be construed as limitations on the scope of an invention that is claimed or of what may be claimed, but rather as descriptions of features specific to particular embodiments. Certain features that are described in this document in the context of separate embodiments can also be implemented in combination in a single embodiment. Conversely, various features that are described in the context of a single embodiment can also be implemented in multiple embodiments separately or in any suitable sub-combination. Moreover, although features may be described above as acting in certain combinations and even initially claimed as such, one or more features from a claimed combination in some cases can be excised from the combination, and the claimed combination may be directed to a sub-combination or a variation of a sub-combination. Similarly, while operations are depicted in the drawings in a particular order, this should not be understood as requiring that such operations be performed in the particular order shown or in sequential order, or that all illustrated operations be performed, to achieve desirable results.

Only a few examples and implementations are disclosed. Variations, modifications, and enhancements to the described examples and implementations and other implementations can be made based on what is disclosed.

## Claims

1. A radar antenna device (100), for installing on a lateral surface (310) of a vehicle moving along a first direction, comprising:
a base (120), comprising a first surface (126a) and a second surface (126b) opposite to the first surface (126a);
a first antenna printed circuit board, PCB, (110a), disposed on the first surface (126a) and comprising a first radar transmitting unit (111a); and
a second antenna PCB (110b), disposed on the first surface (126a) and comprising a second radar transmitting unit (111b),
wherein the first radar transmitting unit (111a) and the second radar transmitting unit (111b) respectively transmit a first radar signal and a second radar signal, and both of the first radar signal and the second radar signal include a strong signal region (113a) and a weak signal region (113b), which a signal border (115a, 115b) is between the strong signal region (113a) and the weak signal region (113b),
wherein an average gain of signal strength of the strong signal regions (113a) is greater than 0 db, and an average gain of signal strength of the weak signal regions (113b) is less than 0 db,
wherein an intersection (117a) is formed by the signal border (115a) of the first radar signal and the signal borer (115a) of the second radar signal, and a shortest distance (115e) between the intersection (117a) and the second surface (126b) is between 30 mm and 80 mm.

2. The radar antenna device of claim 1, wherein, viewed from above, the first radar transmitting unit (111a) comprises a first center point (111ac), and the second radar transmitting unit (111b) comprises a second center point (111bc),
wherein a line (117b) connecting the first center (111ac) point and the second center point (111bc) is not parallel to the first direction.

3. The radar antenna device of claim 1, wherein the first antenna PCB (110a) includes a first radar receiving unit (112a), and the second antenna PCB (110b) includes a second radar receiving unit (112b),
wherein the first radar transmitting unit (111a) comprises a first center point (111ac), and the second radar transmitting unit (111b) comprises a second center point (111bc), which the first center point (111ac), the second center point (111bc) and the intersection (117a) form a detection blind region (117),
wherein the first radar receiving unit (112a), and the second radar receiving unit (112b) are located in the detection blind region (117).

4. The radar antenna device of anyone of the claims 1 to 3, wherein the first antenna PCB (110a) and the first surface (126a) form a first angle (114a), and the second antenna PCB (110b) and the first surface (126a) form a second angle (114b),
wherein both of the first angle (114a) and the second angle (114b) are between 25 degrees and 50 degrees.

5. The radar antenna device of anyone of the claims 1 to 4, further comprising a case (200) covering the first antenna PCB (110a) and the second antenna PCB (110b).

6. The radar antenna device of anyone of the claims 1 to 5, wherein a shortest distance (115d) between the first antenna PCB (110a) and the second antenna PCB (110b) is between 0 mm and 10 mm.

7. The radar antenna device of anyone of the claims 1 to 5, further comprising a first case (130a) covering the first antenna PCB (110a), and a second case (130b) covering the second antenna PCB (110b),
wherein the first case (130a) is not directly contacting the second case (130b).

8. The radar antenna device of claim 7, wherein a shortest distance (115d) between the first antenna PCB (110a) and the second antenna PCB (110b) is between 10 mm and 30 mm.

9. The radar antenna device of claim 7 or 8, wherein the base (120A) comprises a plurality of brackets (150) coupled to the first case (130a) and the second case (130b),
wherein the plurality of brackets (150) is disposed on two sides of the first case (130a).

10. The radar antenna device of anyone of the claims 1 to 9, wherein the lateral surface (310) of the vehicle is parallel to the first direction.

11. A radar antenna device (100"), for installing on a lateral surface (310) of a vehicle moving along a first direction, comprising:
a base (120"), comprising a first surface (126a") and a second surface (126b") opposite to the first surface (126a");
a first antenna PCB (110a"), disposed on the first surface (126a") and comprising a first side length (S'); and
a second antenna PCB (110b"), disposed on the first surface (126a") and comprising a second side length (S'),
wherein the first side length (S') and the second surface (126b") form a first angle (114a), and the second side length (S') and the second surface (126b") form a second angle (114b),
wherein both of the first side length (S') and the second side length (S') are between 30 mm and 50 mm, and both of the first angle (114a) and the second angle (114b) are between 22 degrees and 47 degrees, which a maximum vertical distance (115f) between the second surface (126b") and the first antenna PCB (110a") or the second antenna PCB (110b") is less than 30 mm.

12. The radar antenna device of claim 11, wherein the first antenna PCB (110a") comprises a first radar transmitting unit (111a), and the second antenna PCB (110b") comprises a second radar transmitting unit (111b),
wherein the first radar transmitting unit (111a) and the second radar transmitting unit (111b) respectively transmit a first radar signal and a second radar signal, and both of the first radar signal and the second radar signal include a strong signal region (113a) and a weak signal region (113b), which a signal border (115a, 115b) is between the strong signal region (113a) and the weak signal region (113b),
wherein an average gain of signal strength of the strong signal regions (113a) is greater than 0 db, and an average gain of signal strength of the weak signal regions (113b) is less than 0 db,
wherein an intersection (117a) is formed by the signal border (115a) of the first radar signal and the signal borer (115a) of the second radar signal, and a shortest distance (115e) between the intersection (117a) and the second surface (126b") is between 40 mm and 70 mm.

13. The radar antenna device of claim 12, wherein, viewed from above, the first radar transmitting unit (111a) comprises a first center point (111ac), and the second radar transmitting unit (111b) comprises a second center point (111bc),
wherein a line (117b) connecting the first center point (111ac) and the second center point (111bc) is not parallel to the first direction.

14. The radar antenna device of claim 12, wherein the first antenna PCB (110a) includes a first radar receiving unit (112a), and the second antenna PCB (110b) includes a second radar receiving unit (112b),
wherein the first radar transmitting unit (111a) comprises a first center point (111ac), and the second radar transmitting unit (111b) comprises a second center point (111bc), which the first center point (111ac), the second center point (111bc) and the intersection (117a) form a detection blind region (117),
wherein the first radar receiving unit (112a), and the second radar receiving unit (112b) are located in the detection blind region (117).

15. The radar antenna device of anyone of the claims 11 to 13, further comprising a first case (130a) covering the first antenna PCB (110a), and a second case (130b) covering the second antenna PCB (110b),wherein the first case (130a) is not directly contacting the second case (130b).
